# EUROPEAN PATENT APPLICATION

(11) **EP 1 953 031 A1**
(43) Date of publication of application: **06.08.2008**
(21) Application number: 06823468.1
(22) Date of filing: 14.11.2006
(51) Int. Cl.: B60L 11/18, H01M 10/44, H02J 7/00, H02J 7/02

(54) **CHARGING DEVICE, MOTOR-DRIVEN VEHICLE, AND CHARGING SYSTEM**

(30) Priority: 22.11.2005 JP 2005337362
(71) Applicant: TOYOTA JIDOSHA KABUSHIKI KAISHA, Toyota-shi, Aichi-ken, 471-8571 (JP)
(72) Inventor: NAKAMURA, Makoto, Toyota-shi, Aichi 4718571 (JP); OYOBE, Hichirosai, Toyota-shi, Aichi 4718571 (JP); ISHIKAWA, Tetsuhiro, Toyota-shi, Aichi 4718571 (JP)
(74) Representative: TBK-Patent
(86) International application number: PCT/JP2006/323067
(87) International publication number: WO 2007/060903

(57) **Abstract**

When charging of a power storage device (B) from a commercial power supply (55) is controlled, charging and cooling of the power storage device (B) are performed in a timesharing manner. Specifically, when a temperature of the power storage device (B) rises, a control device (60) turns off a system main relay (5) and stops a boost converter (10), and drives an inverter (40) to operate a compressor (MC) for an air conditioner. When the power storage device (B) is cooled down, the control device (60) turns on the system main relay (5) again and drives the boost converter (10), and stops the inverter (40).

## Description

### Technical Field

The present invention relates to a charging device, an electric-powered vehicle, and a charging system, and particularly relates to a charging method of a charging device mounted on an electric-powered vehicle and capable of charging a power storage device from a commercial power supply outside the vehicle.

### Background Art

Japanese Patent Laying-Open No. 5-276677 discloses a charging device that charges a power storage device mounted on an electric-powered vehicle such as an Electric Vehicle or a Hybrid Vehicle, by using an external power supply. The charging device includes cooling means for cooling the power storage device, and a driving circuit that drives the cooling means with the use of charging electric power from a charger.

In the charging device, when charging electric power is supplied from the charger to the power storage device, a part of the charging electric power is also supplied to the cooling means, so that the cooling means cools the power storage device while the power storage device is being charged. Therefore, with this charging device, it is possible to suppress a temperature rise of the power storage device and perform favorable charging.

However, in the charging device disclosed in Japanese Patent Laying-Open No. 5-276677, if electric power consumption by the cooling means is large, most of the electric power externally supplied is used for driving the cooling means, and hence the power storage device may not be charged.

In the case where an electric-powered air conditioner or the like that consumes a large quantity of electric power but has high cooling capacity is used as the cooling means for the power storage device to ensure a sufficiently-cooled state of the power storage device, and where the power storage device is charged in ordinary households where a quantity of externally-supplied electric power (commercial electric power) to be used is limited to a prescribed quantity under a contract with an electric power company, in particular, the charging device disclosed in Japanese Patent Laying-Open No. 5-276677 may not ensure charging electric power for the power storage device.

In other words, in this charging device, input commercial electric power is allocated for charging of the power storage device and driving of the cooling means. Therefore, this may result in the case where the input commercial electric power may be consumed by driving of the cooling means and a loss caused in voltage conversion, and no charging electric power can be ensured for the power storage device.

On the other hand, increasing the quantity of electric power set under the contract with an electric power company forces a user to bear a burden. Even in the case where the quantity of electric power set under the contract is increased, if the power storage device is upsized and accordingly the cooling means has higher cooling capacity in the future, there is no guarantee that charging electric power for the power storage device can reliably be ensured.

### Disclosure of the Invention

The present invention has been made to solve the above-described problems. An object of the present invention is to provide a charging device capable of reliably charging a power storage device while properly cooling the power storage device.

Another object of the present invention is to provide an electric-powered vehicle capable of reliably charging the power storage device while properly cooling the power storage device.

Still another object of the present invention is to provide a charging system capable of reliably charging the power storage device while properly cooling the power storage device.

According to the present invention, a charging device includes: an electric power input unit receiving commercial electric power supplied from a commercial power supply; a charge control unit converting the commercial electric power input from the electric power input unit into electric power having a voltage level of a power storage device, and charging the power storage device; a cooling device cooling the power storage device; and a control unit driving the charge control unit and the cooling device in a timesharing manner.

In the charging device according to the present invention, the charge control unit and the cooling device are driven in the timesharing manner, so that charging and cooling of the power storage device are performed in the timesharing manner. Therefore, all the commercial electric power input from the electric power input unit is supplied to the power storage device, except for conversion loss, in a time frame in which the power storage device is charged, and is supplied to the cooling device in a time frame in which the power storage device is cooled.

Therefore, with the charging device according to the present invention, it is possible to reliably ensure charging electric power for the power storage device. Consequently, it is possible to reliably charge the power storage device while properly cooling the power storage device. Furthermore, it is possible to charge the power storage device without increasing the quantity of commercial electric power set under the contract.

Preferably, the cooling device is driven by receiving the commercial electric power input from the electric power input unit.

In the charging device, electric power stored in the power storage device is not used for driving the cooling device. Accordingly, with this charging device, it is possible to efficiently charge the power storage device.

Preferably, the control unit controls the charge control unit and the cooling device such that cooling of the power storage device by the cooling device is prioritized over charging of the power storage device by the charge control unit.

In the charging device, cooling of the power storage device by the cooling device is prioritized over charging of the power storage device by the charge control unit. Accordingly, with this charging device, it is possible to reliably prevent breakage of the power storage device due to overheating.

Preferably, the control unit controls the charge control unit and the cooling device such that each of charging electric power for the power storage device and electric power consumption by the cooling device is kept within a prescribed quantity.

Therefore, with this charging device, it is possible to charge and cool the power storage device while keeping a quantity of commercial electric power to be used within a prescribed quantity, for example, a quantity of electric power set under the contract with an electric power company.

Preferably, the charging device further includes a relay device connected between the power storage device and the charge control unit and operating in accordance with a command provided from the control unit. The control unit outputs a shutoff command to the relay device and outputs a drive command to the cooling device when the power storage device is cooled. The control unit outputs a connection command to the relay device and outputs a stop command to the cooling device when the power storage device is charged.

In the charging device, when the power storage device is cooled, the control unit outputs the shutoff command to the relay device, so that the power storage device is electrically disconnected from the charge control unit. When the power storage device is charged, the control unit outputs the connection command to the relay device and outputs the stop command to the cooling device, so that the power storage device is electrically connected to the charge control unit and the cooling device is stopped. Accordingly, with this charging device, it is possible to prevent the power storage device from being cooled and charged simultaneously.

Preferably, the cooling device includes an electric-powered air conditioner.

In the charging device, an electric-powered air conditioner that consumes a large quantity of electric power but has high cooling capacity is used as the cooling device so as to ensure a sufficiently-cooled state of the power storage device. Accordingly, with this charging device, it is possible to reliably charge the power storage device while ensuring a sufficiently-cooled state of the power storage device.

Furthermore, according to the present invention, an electric-powered vehicle includes: a power storage device; an electric motor generating a driving force for the vehicle by using electric power from the power storage device; and any of the charging devices described above.

Therefore, with the electric-powered vehicle according to the present invention, it is possible to reliably charge the power storage device while properly cooling the power storage device. Furthermore, it is possible to charge the power storage device without increasing a quantity of commercial electric power set under the contract.

Preferably, the electric-powered vehicle further includes an internal combustion engine, and another electric motor capable of generating electric power for driving the electric motor, by using power of the internal combustion engine.

More preferably, each of the electric motor and the other electric motor has a star-connected polyphase winding as a stator winding. The electric power input unit in the charging device is connected to a neutral point of the polyphase winding of each of the electric motor and the other electric motor. The charge control unit in the charging device includes first and second inverters provided to correspond to the electric motor and the other electric motor, respectively. The first and second inverters convert the commercial electric power provided to the neutral points of the polyphase windings of the electric motor and the other electric motor by the electric power input unit into direct-current electric power for charging the power storage device, respectively.

Furthermore, according to the present invention, a charging system includes: a plurality of electric-powered vehicles each including any of the charging devices described above; and charging equipment which allows the plurality of electric-powered vehicles to be connected thereto, and which outputs the commercial electric power supplied from the commercial power supply, to at least one of the plurality of electric-powered vehicles. The charging equipment includes an electric power control unit which controls electric power output to the plurality of electric-powered vehicles such that a total sum of the electric power output to the plurality of electric-powered vehicles is kept within a prescribed quantity.

In the charging system according to the present invention, the total sum of the electric power supplied from the charging equipment to the plurality of electric-powered vehicles is kept within the prescribed quantity. Therefore, according to this charging system, it is possible to charge and cool the power storage device in each of the electric-powered vehicles while keeping the quantity of commercial electric power to be used within the prescribed quantity, such as the quantity of electric power set under the contract with an electric power company.

Preferably, each of the plurality of electric-powered vehicles further includes a state quantity calculation unit calculating a state quantity indicating a state of charge of the power storage device, and an output unit outputting the state quantity calculated by the state quantity calculation unit to the charging equipment. The electric power control unit preferentially outputs the commercial electric power to the electric-powered vehicle having the smallest state quantity among the state quantities received from the plurality of electric-powered vehicles.

In the charging system, the electric-powered vehicle having the smallest state quantity (SOC), the state quantity indicating a state of charge of the power storage device, is preferentially charged. Therefore, with this charging system, it is possible to efficiently charge the plurality of electric-powered vehicles.

As described above, according to the present invention, charging and cooling of the power storage device are performed in a timesharing manner, and hence it is possible to reliably charge the power storage device while ensuring a cooled state of the power storage device.

### Brief Description of the Drawings

Fig. 1 is a general block diagram of a hybrid vehicle shown as an example of an electric-powered vehicle according to a first embodiment of the present invention.
Fig. 2 is a drawing that shows a zero-phase equivalent circuit of inverters and motor generators shown in Fig. 1.
Fig. 3 is a flowchart of a process relating to charge control of a power storage device by a control device shown in Fig. 1.
Fig. 4 is a diagram that shows a used state of commercial electric power input through an input port in the hybrid vehicle.
Fig. 5 is a diagram that shows a used state of commercial electric power in the case where it is assumed that charging and cooling of the power storage device are performed simultaneously.
Fig. 6 is a general block diagram that schematically shows a charging system according to a second embodiment of the present invention.
Fig. 7 is a general block diagram of a hybrid vehicle shown in Fig. 6.
Fig. 8 is a flowchart of a process relating to electric power control by an electric power ECU in a charging station shown in Fig. 6.
Fig. 9 is a diagram that shows a used state of commercial electric power supplied to the hybrid vehicles from the charging station shown in Fig. 6.

### Best Modes for Carrying Out the Invention

Embodiments of the present invention will hereinafter be described in detail with reference to the drawings. Note that the same or corresponding portions in the drawings are provided with the same reference characters, and the description thereof will not be repeated.

### [First Embodiment]

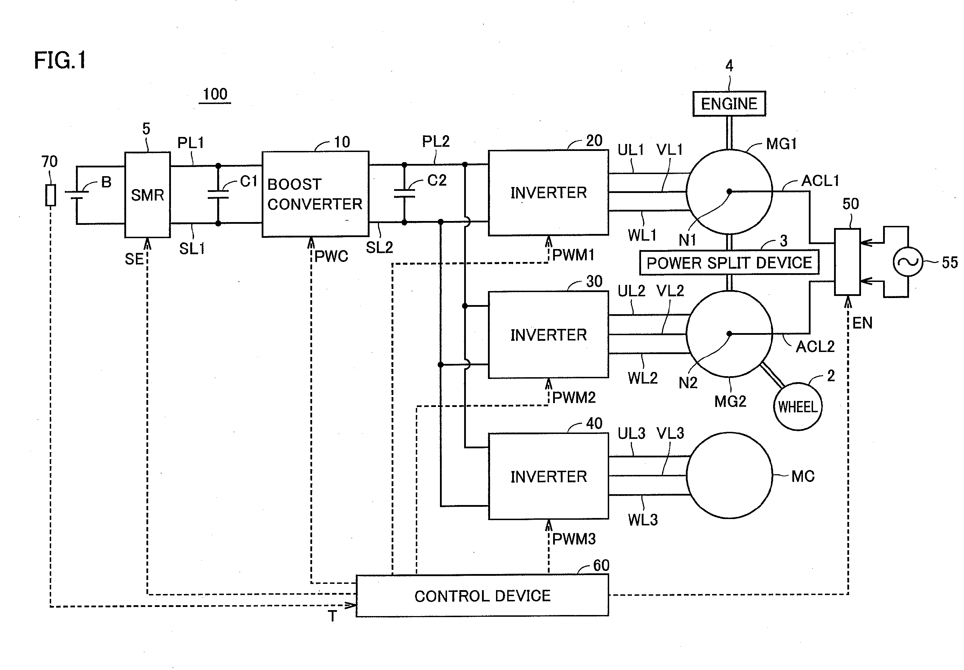

Fig. 1 is a general block diagram of a hybrid vehicle shown as an example of an electric-powered vehicle according to a first embodiment of the present invention. With reference to Fig. 1, a hybrid vehicle 100 includes an engine 4, motor generators MG1, MG2, a power split device 3, and a wheel 2. Hybrid vehicle 100 further includes a power storage device B, a system main relay 5, a boost converter 10, inverters 20, 30, an input port 50, a control device 60, capacitors C1, C2, power supply lines PL1, PL2, ground lines SL1, SL2, U-phase lines UL1, UL2, V-phase lines VL1, VL2, and W-phase lines WL1, WL2. Hybrid vehicle 100 further includes an inverter 40, a U-phase line UL3, a V-phase line VL3, a W-phase line WL3, a compressor MC for an air conditioner, and a temperature sensor 70.

Power split device 3 is linked to engine 4 and motor generators MG1, MG2 for distributing motive power among them. For example, a planetary gear mechanism having three rotary shafts of a sun gear, a planetary carrier, and a ring gear may be used as power split device 3. The three rotary shafts are connected to rotary shafts of engine 4, motor generators MG1, MG2, respectively. For example, engine 4 and motor generators MG1, MG2 can mechanically be connected to power split device 3 by allowing a crankshaft of engine 4 to extend through the hollow center of a rotor of motor generator MG1.

Note that the rotary shaft of motor generator MG2 is linked to wheel 2 via a reduction gear or a differential gear not shown. A speed reducer for the rotary shaft of motor generator MG2 may further be incorporated in power split device 3.

Motor generator MG1 is incorporated in hybrid vehicle 100 for operating as a power generator driven by engine 4 and operating as an electric motor capable of starting engine 4, while motor generator MG2 is incorporated in hybrid vehicle 100 for serving as an electric motor that drives wheel 2 identified as a driving wheel.

Power storage device B is connected to power supply line PL1 and ground line SL1 via system main relay 5. Capacitor C1 is connected between power supply line PL1 and ground line SL1. Boost converter 10 is connected between power supply line PL1 and ground line SL1, and power supply line PL2 and ground line SL2. Capacitor C2 is connected between power supply line PL2 and ground line SL2. Inverters 20, 30, 40 are connected to power supply line PL2 and ground line SL2 in a manner parallel with one another.

Motor generator MG1 includes a Y-connected three-phase coil, not shown, as a stator coil, and is connected to inverter 20 via U, V, W-phase lines UL1, VL1, WL1. Motor generator MG2 also includes a Y-connected three-phase coil, not shown, as a stator coil, and is connected to inverter 30 via U, V, W-phase lines UL2, VL2, WL2. Electric power input lines ACL1, ACL2 have one ends connected to neutral points N1, N2 of the three-phase coils of motor generators MG1, MG2, respectively, and the other ends connected to input port 50. Compressor M3 for the air conditioner is connected to inverter 40 via U, V, W-phase lines UL3, VL3, WL3.

Power storage device B is a direct-current power supply that can be charged and discharged, and is made of, for example, a secondary battery such as a nickel-hydrogen battery or a lithium-ion battery. Power storage device B supplies direct-current electric power to boost converter 10. Furthermore, power storage device B is charged by receiving direct-current electric power output from boost converter 10 to power supply line PL1. Note that a large-capacitance capacitor may be used as power storage device B.

System main relay 5 electrically connects power storage device B to, and electrically disconnects power storage device B from, power supply line PL1 and ground line SL1, in accordance with a signal SE from control device 60. Specifically, when signal SE is activated, system main relay 5 electrically connects power storage device B to power supply line PL1 and ground line SL1. When signal SE is deactivated, system main relay 5 electrically disconnects power storage device B from power supply line PL1 and ground line SL1.

Capacitor C1 smoothes voltage fluctuations across power supply line PL1 and ground line SL1. Boost converter 10 steps up a direct-current voltage received from power storage device B, based on a signal PWC from control device 60, and outputs the stepped-up voltage to power supply line PL2. Furthermore, based on signal PWC from control device 60, boost converter 10 steps down a direct-current voltage received from inverters 20, 30 via power supply line PL2 to a voltage level of power storage device B and charges power storage device B. Boost converter 10 is configured with, for example, a voltage step-up and step-down type chopper circuit and the like.

Capacitor C2 smoothes voltage fluctuations across power supply line PL2 and ground line SL2. Inverter 20 converts a direct-current voltage received from power supply line PL2 into a three-phase alternating-current voltage, based on a signal PWM1 from control device 60, and outputs the converted three-phase alternating-current voltage to motor generator MG1. Furthermore, inverter 20 converts a three-phase alternating-current voltage generated by motor generator MG1 that receives power from engine 4, into a direct-current voltage, based on signal PWM1 from control device 60, and outputs the converted direct-current voltage to power supply line PL2.

Inverter 30 converts a direct-current voltage received from power supply line PL2 into a three-phase alternating-current voltage, based on a signal PWM2 from control device 60, and outputs the converted three-phase alternating-current voltage to motor generator MG2. Motor generator MG2 is thereby driven to generate specified torque. Furthermore, during regenerative braking of the vehicle, inverter 30 converts a three-phase alternating-current voltage generated by motor generator MG2 that receives a turning force from wheel 2, into a direct-current voltage, based on signal PWM2 from control device 60, and outputs the converted direct-current voltage to power supply line PL2.

Furthermore, when power storage device B is charged with the use of commercial electric power input from a commercial power supply 55 through input port 50, inverters 20, 30 convert the commercial electric power provided to neutral points N1, N2 of motor generators MG1, MG2 through input port 50 via electric power input lines ACL1, ACL2 into direct-current electric power, based on signals PWM1, PWM2 from control device 60, respectively, and output the converted direct-current electric power to power supply line PL2.

Each of motor generators MG1, MG2 is a three-phase alternating-current electric motor, and is configured with, for example, a three-phase alternating-current synchronous electric motor. Motor generator MG1 uses power of engine 4 to thereby generate a three-phase alternating-current voltage, and outputs the generated three-phase alternating-current voltage to inverter 20. Furthermore, motor generator MG1 generates a driving force by a three-phase alternating-current voltage received from inverter 20, and starts engine 4. Motor generator MG2 generates a driving torque for the vehicle by a three-phase alternating-current voltage received from inverter 30. Furthermore, during regenerative braking of the vehicle, motor generator MG2 generates a three-phase alternating-current voltage and outputs the same to inverter 30.

Input port 50 is an input terminal for inputting commercial electric power from commercial power supply 55 to hybrid vehicle 100. Input port 50 is connected to a receptacle of commercial power supply 55, e.g., is connected to a power supply receptacle at home. Input port 50 is equipped therein with a relay (not shown) that operates in accordance with a signal EN from control device 60, and in accordance with signal EN, electrically connects electric power input lines ACL1, ACL2 to, and electrically disconnects electric power input lines ACL1, ACL2 from, the commercial power supply.

Inverter 40 converts a direct-current voltage received from power supply line PL2 into a three-phase alternating-current voltage, based on a signal PWM3 from control device 60, and outputs the converted three-phase alternating-current voltage to compressor MC for the air conditioner.

Compressor MC for the air conditioner is a compressor used for an electric-powered air conditioner mounted on hybrid vehicle 100. Compressor MC for the air conditioner is formed of a three-phase alternating-current electric motor, and driven by a three-phase alternating-current voltage received from inverter 40. When compressor MC for the air conditioner is driven and the electric-powered air conditioner is operated, the electric-powered air conditioner functions as an air-conditioning device for the vehicle interior, and also functions as a cooling device that cools power storage device B.

Temperature sensor 70 detects a temperature T of power storage device B, and outputs the detected temperature T to control device 60.

Control device 60 generates signal PWC for driving boost converter 10, and signals PWM1, PWM2 for driving inverters 20, 30, respectively, and outputs the generated signals PWC, PWM1, PWM2 to boost converter 10 and inverters 20, 30, respectively.

Furthermore, when power storage device B is charged with commercial electric power from commercial power supply 55, control device 60 generates signals PWM1, PWM2, PWC for controlling inverters 20, 30 and boost converter 10, respectively, and activates signal SE such that commercial electric power provided to neutral points N1, N2 through input port 50 via electric power input lines ACL1, ACL2 is converted into direct-current electric power to charge power storage device B therewith.

Here, control device 60 monitors a temperature of power storage device B based on temperature T from temperature sensor 70. If the temperature of power storage device B exceeds a preset threshold value indicating a temperature rise of power storage device B, control device 60 deactivates signal SE and stops generating signal PWC, and generates signal PWM3 and outputs the same to inverter 40.

If the temperature of power storage device B falls below a preset threshold value indicating that power storage device B is cooled down, control device 60 activates signal SE again and generates signal PWC, and stops generating signal PWM3.

In other words, when the temperature of power storage device B rises, control device 60 turns off system main relay 5 and stops boost converter 10, and drives inverter 40 to operate compressor MC for the air conditioner. Therefore, electric power supply to power storage device B is shut off, and electric power input through input port 50 is supplied to compressor MC for the air conditioner, so that power storage device B is cooled.

When power storage device B is cooled down, control device 60 turns on system main relay 5 again and drives boost converter 10, and stops inverter 40. Therefore, electric power supply to compressor MC for the air conditioner is shut off, and all the electric power input through input port 50 is supplied to power storage device B except for a quantity of switching loss in inverters 20, 30 and boost converter 10.

As such, in hybrid vehicle 100, charging and cooling of power storage device B are performed in a timesharing manner during charge control of power storage device B.

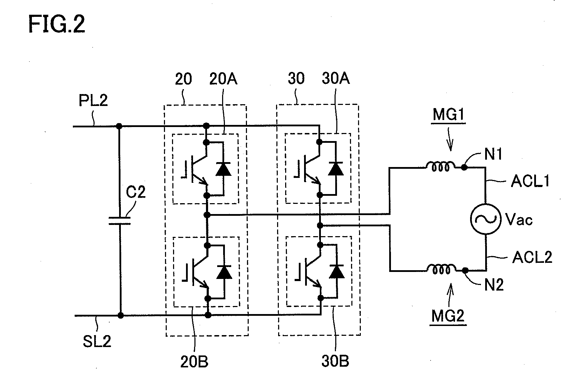

Fig. 2 shows a zero-phase equivalent circuit of inverters 20, 30 and motor generators MG1, MG2 shown in Fig. 1. Each of inverters 20, 30, which is identified as a three-phase inverter, has eight patterns of on/off combination in six transistors. In two out of the eight switching patterns, an interphase voltage is zero, and such a voltage state is referred to as a zero voltage vector. In the zero voltage vector, three transistors in the upper arm can be regarded as being in the same switching state (all of them are on or off), and three transistors in the lower arm can also be regarded as being in the same switching state. Therefore, in Fig. 2, the three transistors in the upper arm of inverter 20 are collectively shown as an upper arm 20A, while the three transistors in the lower arm of inverter 20 are collectively shown as a lower arm 20B. Similarly, the three transistors in the upper arm of inverter 30 are collectively shown as an upper arm 30A, while the three transistors in the lower arm of inverter 30 are collectively shown as a lower arm 30B.

As shown in Fig. 2, the zero-phase equivalent circuit can be recognized as a single-phase PWM converter to which alternating-current commercial electric power provided to neutral points N1, N2 via electric power input lines ACL1, ACL2 is input. Accordingly, by changing the zero voltage vector in each of inverters 20, 30 to provide switching control such that inverters 20, 30 operate as phase arms of the single-phase PWM converter, respectively, it is possible to convert the alternating-current commercial electric power into direct-current electric power and output the same to power supply line PL2.

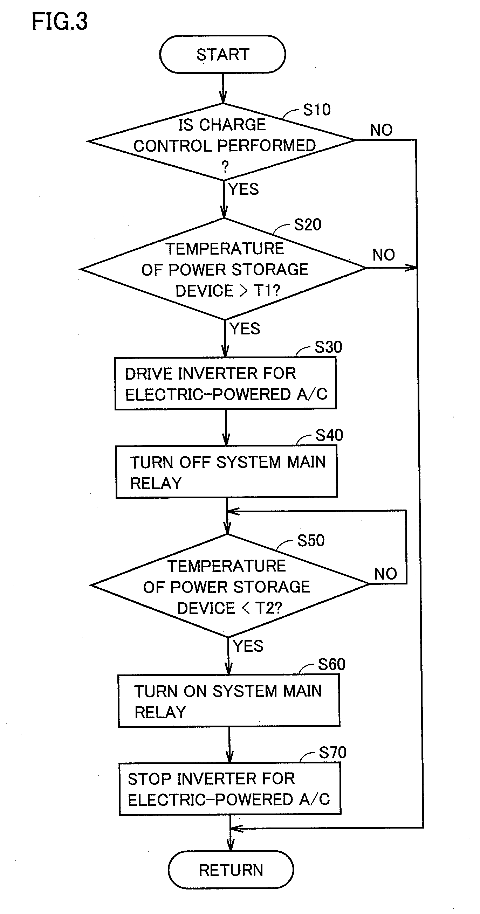

Fig. 3 is a flowchart of a process relating to charge control of power storage device B by control device 60 shown in Fig. 1. Note that the process shown in this flowchart is invoked from a main routine and executed whenever certain time elapses or a prescribed condition is established.

With reference to Fig. 3, control device 60 initially determines whether or not charge control of power storage device B is performed (step S10). For the determination as to whether or not charge control of power storage device B is performed, it is determined that the charge control is performed if commercial electric power obtained from commercial power supply 55 is applied to input port 50 and the relay in input port 50 is turned on. If control device 60 determines that the charge control is not performed (NO in step S10), control device 60 terminates the process without performing a series of subsequent processes, and the process is returned to the main routine.

If it is determined in step S10 that the charge control is performed (YES in step S10), control device 60 determines whether or not the temperature of power storage device B is higher than a preset threshold value T1 indicating a temperature rise of power storage device B, based on temperature T from temperature sensor 70 (step S20). If control device 60 determines that the temperature of power storage device B is equal to or lower than threshold value T1 (NO in step S20), control device 60 terminates the process without performing a series of subsequent processes, and the process is returned to the main routine.

In contrast, if it is determined that the temperature of power storage device B is higher than threshold value T1 (YES in step S20), control device 60 generates signal PWM3 and outputs the same to inverter 40, and drives inverter 40 that corresponds to compressor MC for the air conditioner (step S30). Furthermore, control device 60 deactivates signal SE, which has been activated as the charge control of power storage device B was started, to turn off system main relay 5 (step S40). Note that control device 60 also stops boost converter 10 at that time. System main relay 5 is turned off and boost converter 10 is stopped, so that all the electric power input through input port 50 is supplied to compressor MC for the air conditioner, and the electric-powered air conditioner cools power storage device B.

While the electric-powered air conditioner cools power storage device B, control device 60 determines whether or not the temperature of power storage device B falls below a preset threshold value T2 (< T1) indicating that power storage device B is sufficiently cooled down, based on temperature T from temperature sensor 70 (step S50).

If control device 60 determines that the temperature of power storage device B falls below threshold value T2 (YES in step S50), control device 60 activates signal SE and turns on system main relay 5 (step S60). Note that control device 60 also starts driving boost converter 10 at that time. Furthermore, control device 60 stops outputting signal PWM3 to inverter 40 and stops inverter 40 (step S70). Accordingly, all the electric power input through input port 50 is supplied to power storage device B except for a quantity of switching loss in inverters 20, 30 and boost converter 10, so that power storage device B is charged.

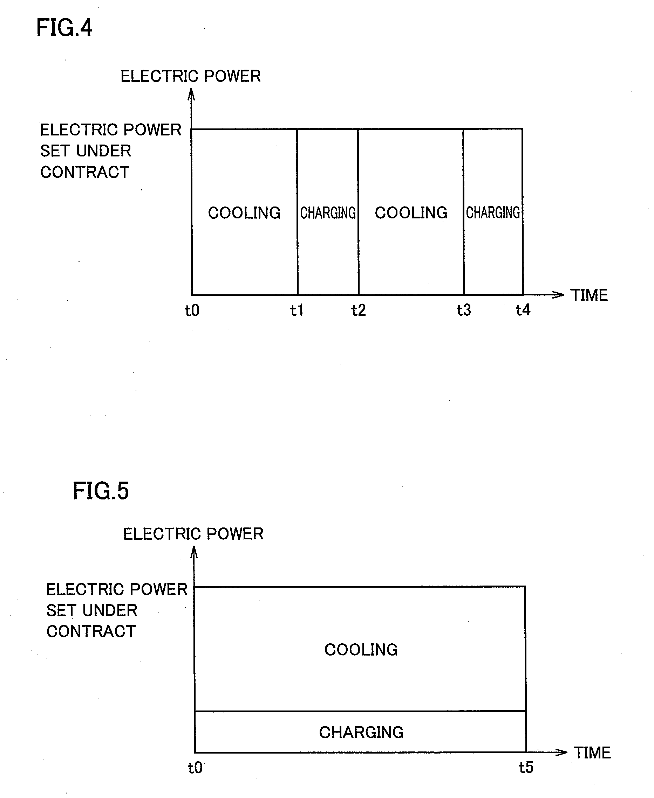

Fig. 4 is a diagram that shows a used state of commercial electric power input through input port 50 in hybrid vehicle 100. With reference to Fig. 4, the axis of abscissas shows time, while the axis of ordinates shows commercial electric power input through input port 50. A quantity of electric power that can be used by hybrid vehicle 100 is limited by the electric power set under the contract with an electric power company.

In Fig. 4, based on the temperature of power storage device B, the input commercial electric power is used for cooling power storage device B at time t0-t1 and t2-t3, while the input commercial electric power is used for charging power storage device B at time t1-t2 and t3-t4.

For comparison, Fig. 5 is a diagram that shows a used state of commercial electric power in the case where it is assumed that charging and cooling of power storage device B are performed simultaneously. With reference to Fig. 5, in an environment at a high temperature, such as under the scorching sun in summer, a larger quantity of the input commercial electric power is allocated for cooling of power storage device B, as shown in the diagram. The electric-powered air conditioner, in particular, has higher cooling capacity but consumes a larger quantity of electric power. Therefore, although power storage device B is always charged, only a small quantity of charging electric power is input to power storage device B. In addition, switching loss occurs in inverters 20, 30 and boost converter 10, and hence charging electric power that should be input to power storage device B can be 0 owing to the switching loss.

In contrast, in the first embodiment, cooling and charging of power storage device B are performed in a timesharing manner, as described above. Therefore, even if a time frame for charging power storage device B is shortened, sufficient charging electric power is ensured in the time frame for charging (time t1-t2 and t3-t4 in Fig. 3), so that charging electric power to be input to power storage device B does not become 0 owing to the switching loss in inverters 20, 30 and boost converter 10.

In the foregoing, when charging of power storage device B with commercial power supply 55 is controlled, the commercial electric power input through input port 50 is used to drive compressor MC for the air conditioner. However, instead of the commercial electric power input through input port 50, the electric power stored in power storage device B may be used to drive compressor MC for the air conditioner. In this case, if a state of charge (SOC) of power storage device B is remarkably lowered by using the electric power stored in power storage device B to drive compressor MC for the air conditioner, it is also possible to provide switching such that the electric power input through input port 50 is supplied to compressor MC for the air conditioner, as described above.

As described above, according to the first embodiment, charging and cooling of power storage device B are performed in a timesharing manner, and hence charging electric power for power storage device B can reliably be ensured. Consequently, it is possible to reliably charge power storage device B while ensuring a cooled state of power storage device B. Furthermore, it is possible to charge power storage device B without increasing the quantity of commercial electric power set under the contract.

### [Second Embodiment]

In a second embodiment, there is shown a configuration of a charging system capable of charging a plurality of electric-powered vehicles.

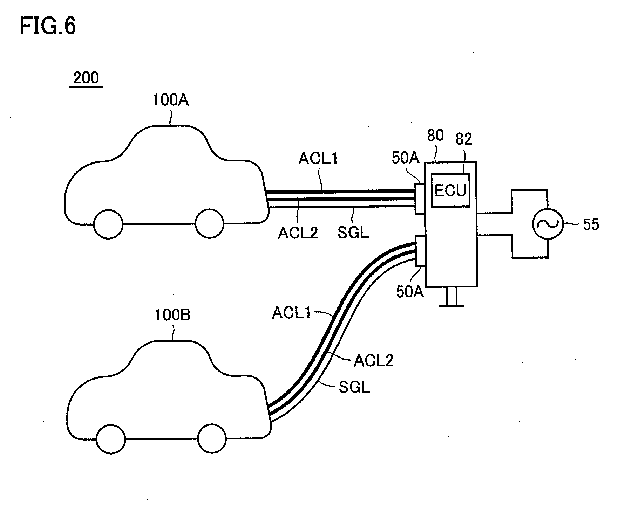

Fig. 6 is a general block diagram that schematically shows a charging system according to the second embodiment of the present invention. Although Fig. 6 shows the case where two electric-powered vehicles are charged as a representative example, more than two electric-powered vehicles may also be charged.

With reference to Fig. 6, a charging system 200 includes hybrid vehicles 100A, 100B, a charging station 80, and commercial power supply 55. Each of hybrid vehicles 100A, 100B is connected to charging station 80 via an input port 50A, and receives commercial electric power supplied from commercial power supply 55 from charging station 80 via electric power input lines ACL1, ACL2. Furthermore, each of hybrid vehicles 100A, 100B calculates an SOC of a power storage device mounted thereon, and outputs the calculated SOC to charging station 80 via a signal line SGL.

Charging station 80 receives commercial electric power from commercial power supply 55, and supplies the received commercial electric power to hybrid vehicles 100A, 100B. Charging station 80 includes an electric power ECU (Electronic Control Unit) 82. Electric power ECU 82 receives, from each of hybrid vehicles 100A, 100B via signal line SGL, an SOC of the power storage device mounted on the vehicle. Electric power ECU 82 controls electric power to be output to hybrid vehicles 100A, 100B from charging station 80 such that the power storage device mounted on the vehicle having a lower SOC is preferentially charged.

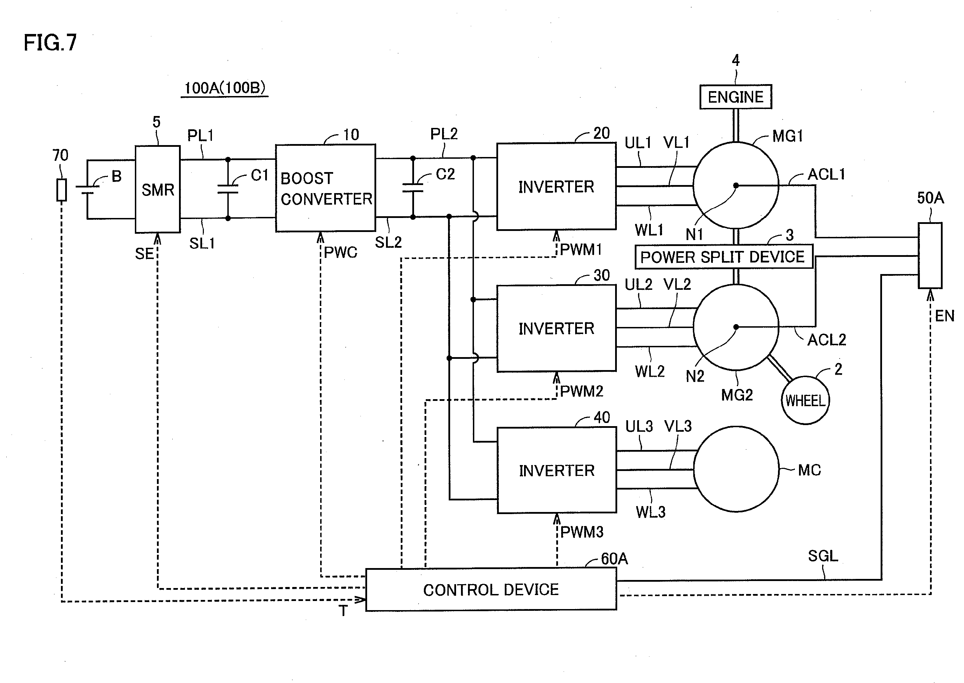

Fig. 7 is a general block diagram of hybrid vehicles 100A, 100B shown in Fig. 6. Note that hybrid vehicle 100B has the same configuration as that of hybrid vehicle 100A, and hence hybrid vehicle 100A will now be described.

With reference to Fig. 7, hybrid vehicle 100A further includes signal line SGL, in the configuration of hybrid vehicle 100 according to the first embodiment shown in Fig. 1, and includes input port 50A and a control device 60A instead of input port 50 and control device 60, respectively.

Signal line SGL is disposed between control device 60A and input port 50A. Control device 60A calculates an SOC of power storage device B, and outputs the calculated SOC to signal line SGL. As to a method of calculating an SOC of power storage device B, it is possible to use a known methodology by using a terminal voltage, a charging/discharging current, a temperature, and others of power storage device B.

Input port 50A outputs the SOC of power storage device B, which has been received from control device 60A via signal line SGL, to charging station 80 not shown. Note that other configurations of input port 50A are the same as those of input port 50 shown in Fig. 1.

Note that other configurations of hybrid vehicle 100A are the same as those of hybrid vehicle 100 shown in Fig. 1.

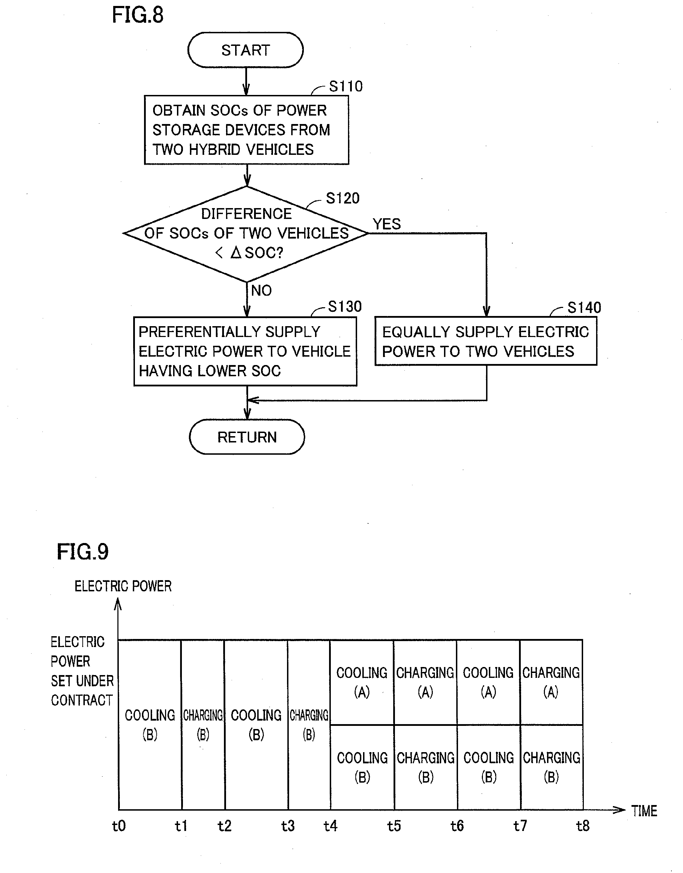

Fig. 8 is a flowchart of a process relating to electric power control by electric power ECU 82 in charging station 80 shown in Fig. 6. Note that the process shown in this flowchart is invoked from a main routine and executed whenever certain time elapses or a prescribed condition is established.

With reference to Fig. 8, electric power ECU 82 obtains, via signal line SGL from each of hybrid vehicles 100A, 100B connected to charging station 80, an SOC of power storage device B mounted on the vehicle (step S110).

Next, electric power ECU 82 calculates a difference (absolute value) between the SOCs obtained from the vehicles, and determines whether or not the calculated SOC difference is below a preset threshold value ΔSOC indicating that the SOCs of hybrid vehicles 100A, 100B reach approximately the same level (step S120).

If electric power ECU 82 determines that the calculated SOC difference (absolute value) is equal to or larger than threshold value ΔSOC (NO in step S120), electric power ECU 82 controls electric power output from charging station 80 such that commercial electric power is preferentially supplied to the vehicle having a lower SOC from charging station 80 (step S130).

In contrast, if it is determined in step S120 that the calculated SOC difference (absolute value) is below threshold value ΔSOC (YES in step S120), electric power ECU 82 controls electric power output from charging station 80 such that commercial electric power is approximately equally supplied to two hybrid vehicles 100A, 100B from charging station 80 (step S140).

Fig. 9 is a diagram that shows a used state of commercial electric power supplied to hybrid vehicles 100A, 100B from charging station 80 shown in Fig. 6. With reference to Fig. 9, the axis of abscissas shows time, while the axis of ordinates shows commercial electric power supplied from charging station 80 to hybrid vehicle 100A and/or 100B. "COOLING (A)" shows that commercial electric power supplied from charging station 80 is used for cooling power storage device B mounted on hybrid vehicle 100A, while "COOLING (B)" shows that commercial electric power is used for cooling power storage device B mounted on hybrid vehicle 100B. Furthermore, "CHARGING (A)" shows that commercial electric power supplied from charging station 80 is used for charging power storage device B mounted on hybrid vehicle 100A, while "CHARGING (B)" shows that commercial electric power is used for charging power storage device B mounted on hybrid vehicle 100B. A quantity of electric power that can be supplied from charging station 80 to hybrid vehicle 100A and/or 100B is limited by the electric power set under the contract with an electric power company.

In Fig. 9, the SOC of power storage device B mounted on hybrid vehicle 100B is lower than the SOC of power storage device B mounted on hybrid vehicle 100A at time t0-t4, and hence power storage device B mounted on hybrid vehicle 100B is preferentially charged over power storage device B mounted on hybrid vehicle 100A. Note that, based on the temperature of power storage device B mounted on hybrid vehicle 100B, the input commercial electric power is used for cooling power storage device B mounted on hybrid vehicle 100B at time t0-t1 and t2-t3, and used for charging power storage device B at time t1-t2 and t3-t4.

When the SOC of power storage device B mounted on hybrid vehicle 100B becomes approximately equal to the SOC of power storage device B mounted on hybrid vehicle 100A at time t4, electric power is then approximately equally supplied to hybrid vehicles 100A, 100B, within the range of the electric power set under the contract.

Fig. 9 shows the case where the timings of switching between cooling and charging of power storage devices B mounted on hybrid vehicles 100A, 100B are the same timing in hybrid vehicles 100A, 100B at time t4-t8. However, the timing of switching between cooling and charging of power storage device B is not necessarily the same in hybrid vehicles 100A, 100B, and is determined based on a temperature of power storage device B mounted on each vehicle.

As described above, according to the second embodiment, it is possible to charge and cool the power storage devices in hybrid vehicles 100A, 100B, respectively, while keeping a quantity of commercial electric power to be used within the quantity of electric power set under the contract with an electric power company. Furthermore, the vehicle having a lower SOC of the power storage device is preferentially charged, and hence it is possible to efficiently charge a plurality of vehicles.

In the above-described first and second embodiments, an electric-powered air conditioner including compressor MC for the air conditioner is used as a cooling device for cooling power storage device B. However, a cooling fan and others may separately be provided instead of the electric-powered air conditioner.

In the foregoing, a hybrid vehicle is shown as an example of an electric-powered vehicle according to the present invention. However, the scope of application of the present invention is not limited to hybrid vehicles, and also includes an Electric Vehicle, a fuel cell vehicle mounted with a Fuel Cell and a power storage device that can be charged with commercial electric power, and other vehicles.

Although commercial electric power is input from neutral points N1, N2 of motor generators MG1, MG2 in the foregoing, an AC/DC converter may separately be provided to input commercial electric power from commercial power supply 55. It is to be noted that, according to the above-described first and second embodiments in which commercial electric power is input to neutral points N1, N2 of motor generators MG1, MG2, there is no need to separately provide an AC/DC converter, and hence this can contribute to decrease in weight and cost of the vehicle.

Although boost converter 10 is provided in the foregoing, the present invention is also applicable to an electric-powered vehicle that does not include boost converter 10.

Note that in the foregoing, input port 50 (50A) and electric power input lines ACL1, ACL2 form an "electric power input unit" in the present invention. Inverters 20, 30, boost converter 10, system main relay 5, and control device 60 (60A) form a " charge control unit" in the present invention. Compressor MC for the air conditioner and inverter 40 correspond to a "cooling device" in the present invention, and control device 60 (60A) corresponds to a "control unit" in the present invention. Furthermore, system main relay 5 corresponds to a "relay device" in the present invention, and motor generator MG2 corresponds to an "electric motor" in the present invention.

Furthermore, charging station 80 corresponds to "charging equipment" in the present invention, and electric power ECU 82 corresponds to an "electric power control unit" in the present invention. Furthermore, control device 60A corresponds to a "state quantity calculation unit" in the present invention, and input port 50A corresponds to an "output unit" in the present invention. Furthermore, engine 4 corresponds to an "internal combustion engine" in the present invention, and motor generator MG1 corresponds to "another electric motor" in the present invention.

It should be understood that the embodiments disclosed herein are illustrative and not limitative in all aspects. The scope of the present invention is shown not by the description of the embodiments above but by the scope of the claims, and is intended to include all modifications within the equivalent meaning and scope of the claims.

## Claims

1. A charging device comprising:
an electric power input unit receiving commercial electric power supplied from a commercial power supply;
a charge control unit converting said commercial electric power input from said electric power input unit into electric power having a voltage level of a power storage device, and charging said power storage device;
a cooling device cooling said power storage device; and
a control unit driving said charge control unit and said cooling device in a timesharing manner.

2. The charging device according to claim 1, wherein said cooling device is driven by receiving said commercial electric power input from said electric power input unit.

3. The charging device according to claim 1, wherein said control unit controls said charge control unit and said cooling device such that cooling of said power storage device by said cooling device is prioritized over charging of said power storage device by said charge control unit.

4. The charging device according to claim 1, wherein said control unit controls said charge control unit and said cooling device such that each of charging electric power for said power storage device and electric power consumption by said cooling device is kept within a prescribed quantity.

5. The charging device according to claim 1, further comprising a relay device connected between said power storage device and said charge control unit and operating in accordance with a command provided from said control unit, wherein
said control unit
outputs a shutoff command to said relay device and outputs a drive command to said cooling device when said power storage device is cooled, and
outputs a connection command to said relay device and outputs a stop command to said cooling device when said power storage device is charged.

6. The charging device according to claim 1, wherein said cooling device includes an electric-powered air conditioner.

7. An electric-powered vehicle comprising:
a power storage device;
an electric motor generating a driving force for the vehicle by using electric power from said power storage device; and
the charging device recited in any one of claims 1-6.

8. The electric-powered vehicle according to claim 7, further comprising
an internal combustion engine, and
another electric motor capable of generating electric power for driving said electric motor, by using power of said internal combustion engine.

9. The electric-powered vehicle according to claim 8, wherein
each of said electric motor and said other electric motor has a star-connected polyphase winding as a stator winding,
the electric power input unit in said charging device is connected to a neutral point of the polyphase winding of each of said electric motor and said other electric motor,
the charge control unit in said charging device includes first and second inverters provided to correspond to said electric motor and said other electric motor, respectively, and
said first and second inverters convert the commercial electric power provided to the neutral points of the polyphase windings of said electric motor and said other electric motor by said electric power input unit into direct-current electric power for charging said power storage device, respectively.

10. A charging system comprising:
a plurality of electric-powered vehicles each including the charging device recited in any one of claims 1-6; and
charging equipment allowing said plurality of electric-powered vehicles to be connected thereto, and outputting the commercial electric power supplied from the commercial power supply, to at least one of said plurality of electric-powered vehicles,
said charging equipment including an electric power control unit controlling electric power output to said plurality of electric-powered vehicles such that a total sum of the electric power output to said plurality of electric-powered vehicles is kept within a prescribed quantity.

11. The charging system according to claim 10, wherein
each of said plurality of electric-powered vehicles further includes
a state quantity calculation unit calculating a state quantity indicating a state of charge of said power storage device, and
an output unit outputting the state quantity calculated by said state quantity calculation unit to said charging equipment, wherein
said electric power control unit preferentially outputs said commercial electric power to the electric-powered vehicle having the smallest state quantity among said state quantities received from said plurality of electric-powered vehicles.
